# EUROPEAN PATENT APPLICATION

(11) **EP 4 738 589 A1**
(43) Date of publication of application: **06.05.2026**
(21) Application number: 24831037.7
(22) Date of filing: 28.06.2024
(51) Int. Cl.: H01M 50/367, H01M 50/249, H01M 50/244, H01M 50/204

(54) **BATTERY PACK**

(30) Priority: 28.06.2023 CN 202321671807 U; 28.06.2023 CN 202321671845 U; 28.06.2023 CN 202321674025 U
(71) Applicant: SVOLT Energy Technology Co., Ltd., Changzhou, Jiangsu 213200 (CN)
(72) Inventor: CHEN, Xuchao, Changzhou, Jiangsu 213200 (CN); QIN, Chengshuo, Changzhou, Jiangsu 213200 (CN); TANG, Lijuan, Changzhou, Jiangsu 213200 (CN); LI, Guobing, Changzhou, Jiangsu 213200 (CN); YANG, Chong, Changzhou, Jiangsu 213200 (CN)
(74) Representative: Michalski Hüttermann & Partner Patentanwälte mbB
(86) International application number: PCT/CN2024/102578
(87) International publication number: WO 2025/002412

(57) **Abstract**

The present application relates to the field of lithium battery technology, and particularly to a battery pack. The battery pack includes a cell module, at least one thermal protection component, a plurality of support bars, a bottom plate, a housing, and a gas passage crossbeam. The bottom plate is connected to the housing such that the bottom plate and the housing together enclose an accommodation space. The bottom of the cell module is provided with at least one row of explosion-proof valves. The cell module is disposed on the thermal protection component, and each thermal protection component is disposed corresponding to one row of explosion-proof valves. The thermal protection component is disposed on the bottom plate with the support bars disposed on both sides of each thermal protection component. The cell module is disposed on the bottom plate via the support bars, such that two support bars disposed on both sides of the thermal protection component, the thermal protection component, and the bottom of the cell module together enclose an exhaust passage. The gas passage crossbeam is disposed on the bottom plate, and the exhaust passage is in communication with the gas passage crossbeam. The housing includes an exhaust portion, and the exhaust passage is in communication with the exhaust portion via the gas passage crossbeam. The battery pack of the present application improves the discharge speed of vent gas and achieves electrical and thermal separation within the battery pack.

## Description

### CROSS-REFERENCE TO RELATED APPLICATIONS

The present application claims priority to a Chinese patent application filed with the China National Intellectual Property Administration on June 28, 2023, with application number 202321671845.4 and invention title "Battery Pack", claims priority to a Chinese patent application filed with the China National Intellectual Property Administration on June 28, 2023, with application number 202321671807.9 and invention title "Battery Pack", and claims priority to a Chinese patent application filed with the China National Intellectual Property Administration on June 28, 2023, with application number 202321674025.0 and invention title "Battery Pack", the entire contents of which are incorporated by reference into the present application.

### TECHNICAL FIELD

The present application relates to the field of lithium battery technology, and particularly relates to a battery pack.

### BACKGROUND

With the rise of new energy vehicles, the design of battery packs flourished with diverse approaches. Safety design of battery packs has now become a hot prominent research focus, with hot topics including thermal runaway safety and the layout configurations of battery packs.

On one hand, in traditional designs, explosion-proof valves for battery cells are typically disposed on the top or sides of the cell module, while no dedicated exhaust channels are provided at the top or sides of the battery pack to facilitate gas flow. A large amount of gas inside the battery pack not only affects terminals of the cell module, but also slows down the venting of gases released from the cell explosion-proof valves to the outside of the battery pack. Therefore, such existing battery pack structures fail to achieve thermal and electrical separation, while also exhibiting slow gas discharge.

On the other hand, conventional battery packs often consist of multiple cells assembled into modules which are directly installed into the housing of the battery pack. However, traditional battery pack designs have low assembly efficiency. To address this issue, blade battery pack structures have emerged. An existing blade battery pack divides an accommodation space of the housing into four parts through a crossbeam and a longitudinal beam, with each part correspondingly installing one cell module and a bottom plate support disposed at a bottom. However, in the existing blade battery pack, since the bottom plate support is disposed at the bottom of the cell module, an explosion-proof valve disposed at the bottom of the cell module has inconvenient gas discharge, and the blade battery pack has a large weight.

### SUMMARY

The purpose of the present application is to provide a battery pack to solve a problem that an existing battery pack structure fails to achieve thermal and electrical separation, has slow gas discharge, or has excessive battery pack weight.

According to a first aspect of the present application, a battery pack is provided, the battery pack includes a cell module, at least one thermal protection component, a plurality of support bars, a bottom plate, a housing, and a gas passage crossbeam, the bottom plate is connected to the housing such that the bottom plate and the housing together enclose an accommodation space for accommodating the cell module; the bottom of the cell module is provided with at least one row of explosion-proof valves, the cell module is disposed on the thermal protection component, and each thermal protection component is disposed corresponding to one row of explosion-proof valves; the thermal protection component is disposed on the bottom plate, with the support bars disposed on both sides of each thermal protection component, and the cell module is disposed on the bottom plate via the support bars, such that two support bars disposed on both sides of the thermal protection component, the thermal protection component, and the bottom of the cell module together enclose an exhaust passage; the gas passage crossbeam is disposed on the bottom plate, and the exhaust passage is in communication with the gas passage crossbeam; the housing includes an exhaust portion, and the exhaust passage is in communication with the exhaust portion via the gas passage crossbeam.

Optionally, a plurality of thermal protection components are disposed on the bottom plate at intervals along a first direction, and each thermal protection component is provided with said support bars on two opposite sides thereof in the first direction, the bottom plate includes a plurality of strip-shaped through holes, the thermal protection components are disposed in corresponding strip-shaped through holes, and the thermal protection components are provided with thinned portions; the battery pack further includes a bottom protection plate disposed on the side of the bottom plate facing away from the cell module, the bottom protection plate and the bottom plate are spaced apart in a second direction, such that a buffer cavity is formed between the bottom protection plate and the bottom plate.

Optionally, the housing includes a front edge beam, a rear edge beam, and two side beams disposed opposite to each other, the two ends of the front edge beam are respectively connected to first ends of the two side beams, and the two ends of the rear edge beam are respectively connected to second ends of the two side beams; the exhaust portion is disposed on the rear edge beam, the gas passage crossbeam includes a first cavity extending along the first direction, each of the side beams includes a second cavity extending along a third direction, the first cavity is in communication with the exhaust portion via the second cavity, and the third direction is perpendicular to the first direction.

Optionally, the cell module includes a plurality of cell assemblies, each of the cell assemblies includes a plurality of cells stacked along the third direction, and terminals of the cells are disposed on end faces of the cells in the first direction.

Optionally, the battery pack further includes a longitudinal beam, the longitudinal beam extends along the third direction perpendicular to the first direction, the gas passage crossbeam and the longitudinal beam divide the accommodation space into a plurality of placement portions, one of the cell assemblies is correspondingly disposed in each of the placement portions, and a side surface of each of the cell assemblies close to the gas passage crossbeam abuts against the gas passage crossbeam.

Optionally, both sides of the gas passage crossbeam that are opposite to each other in the third direction are provided with a plurality of ventilation holes, and each of the ventilation holes is in communication with a corresponding exhaust passage; the edge of the ventilation hole is provided with a sealing strip, and the side surface of the cell assembly close to the gas passage crossbeam fits against the gas passage crossbeam via the sealing strip.

Optionally, the battery pack further includes a position-limiting strip, the position-limiting strip is fixedly disposed on both sides of the gas passage crossbeam that are opposite to each other in the third direction, and the position-limiting strip extends along the first direction.

Optionally, the battery pack further includes a front crossbeam and a rear crossbeam both extending along the first direction, two ends of the cell module respectively abut against the front crossbeam and the rear crossbeam;
the rear crossbeam further includes a third cavity extending along the first direction and a gas passage opening, the gas passage opening is disposed offset from the exhaust portion, and the second cavity is in communication with the exhaust portion sequentially via the third cavity and the gas passage opening.

Optionally, the support bar includes a support body and a plurality of elastic support columns, the elastic support columns are embedded in the support body, and the plurality of elastic support columns are spaced apart along an extending direction of the support body.

Optionally, the thermal protection component includes a plurality of thinned portions, and the plurality of thinned portions included in each of the thermal protection components are disposed in one-to-one correspondence with a plurality of the explosion-proof valves in a corresponding row.

The battery pack provided by the present application supports the cell module above the bottom plate through two support bars, such that the two support bars disposed on both sides of the thermal protection component, the thermal protection component, and the bottom of the cell module together enclose an exhaust passage. When the gas pressure inside the cell module exceeds a threshold, the gas inside the cell module is capable of breaking through the explosion-proof valves and entering the exhaust passage. On one hand, the vent gas is guided to the exhaust portion via the exhaust passage, effectively improving the discharge speed of the vent gas from the battery pack; on the other hand, the exhaust passage effectively isolates the vent gas from the accommodation space, effectively preventing the vent gas from impacting electrical connection structures of the cell module, ensuring the electrical connection stability of the cell module, thereby achieving electrical and thermal separation within the battery pack and improving the safety of the battery pack.

According to a second aspect of the present application, a battery pack is provided. The battery pack includes a housing, a partition beam, a plurality of cell assemblies, and a bottom plate, the bottom plate is connected to the housing, and the bottom plate and the housing together enclose an accommodation space for accommodating the cell assemblies; the partition beam is connected to the housing to divide the accommodation space into a plurality of accommodation portions, one of the cell assemblies is correspondingly disposed in each of the accommodation portions, the bottom plate includes at least one strip-shaped through hole, the bottom of each of the cell assemblies is provided with at least one row of explosion-proof valves, and each row of the explosion-proof valves is in communication with a corresponding strip-shaped through hole.

Optionally, the bottom plate includes a plurality of strip-shaped through holes spaced apart along a first direction, the partition beam includes a middle crossbeam and a longitudinal beam, the middle crossbeam and the longitudinal beam are both connected to the housing to divide the accommodation space into four accommodation portions, where the middle crossbeam extends along the first direction, the longitudinal beam extends along a second direction, and the first direction is perpendicular to the second direction, the battery pack further includes a front crossbeam and a rear crossbeam extending along the first direction, the front crossbeam and the rear crossbeam are both connected to the housing, and four of the cell assemblies are disposed between the front crossbeam and the rear crossbeam.

Optionally, the housing includes a front edge beam, a rear edge beam, and two side edge beams connected to one another, the front edge beam and the rear edge beam both extend along the first direction, and the side edge beams extend along the second direction, the two ends of the middle crossbeam are respectively connected to the two side edge beams, the two ends of the front crossbeam are respectively connected to the two side edge beams, the two ends of the rear crossbeam are respectively connected to the two side edge beams, and the two ends of the longitudinal beam are respectively connected to the front crossbeam and the rear crossbeam.

Optionally, the bottom plate includes a plurality of strip-shaped plate members extending along the second direction, a strip-shaped through hole is formed between two adjacent strip-shaped plate members, each of the strip-shaped plate members is simultaneously connected to the front crossbeam, the middle crossbeam, and the rear crossbeam, among the plurality of strip-shaped plate members, two of the strip-shaped plate members are respectively connected to the two side edge beams, and one of the strip-shaped plate members is connected to the longitudinal beam.

Optionally, two of the strip-shaped plate members, the two side edge beams, the front edge beam, and the rear edge beam are integrally formed by profile extrusion.

Optionally, the front crossbeam, the middle crossbeam, and the rear crossbeam are all connected to the plurality of strip-shaped plate members through a rivet, and the front crossbeam, the middle crossbeam, and the rear crossbeam are all a hollow structure.

Optionally, the battery pack further includes a cooling plate and a thermally conductive structural adhesive, the cooling plate is connected to the housing and located at the top of the cell assemblies, and the cooling plate is bonded to the cell assemblies via the thermally conductive structural adhesive.

Optionally, the battery pack further includes a bottom protection plate, the bottom protection plate is connected to the housing and located at the bottom of the cell assemblies, an external bolt is capable of sequentially passing through the cooling plate and the middle crossbeam and connecting to the bottom protection plate, and an external bolt is capable of sequentially passing through the cooling plate, the longitudinal beam, and a corresponding strip-shaped plate member and connecting to the bottom protection plate.

Optionally, the battery pack further includes a structural adhesive and an adhesive-applying position-limiting strip, the adhesive-applying position-limiting strip is disposed at the edge of the strip-shaped plate member, the structural adhesive is disposed inside the adhesive-applying position-limiting strip, and the cell assemblies and the bottom plate are bonded together via the structural adhesive.

Optionally, the battery pack further includes a plurality of thermal protection components and a plurality of support bars, the plurality of support bars are disposed on the bottom protection plate and spaced apart along the first direction, each of the thermal protection components is bridged via two adjacent support bars, and the thermal protection components are disposed on a side of the support bars facing away from the bottom protection plate, such that the two adjacent support bars, the bottom protection plate, and a corresponding thermal protection component together enclose an exhaust passage; the cell assemblies are disposed on the thermal protection components, among the explosion-proof valves included in each of the cell assemblies, each row of the explosion-proof valves is connected to a corresponding thermal protection component through a corresponding strip-shaped through hole, the housing includes an exhaust portion, and each of the exhaust passages is in communication with the exhaust portion.

According to the battery pack of the present application, a blade battery pack is divided into a plurality of accommodation portions by the partition beam, and each accommodation portion is correspondingly provided with one cell assembly. On one hand, the blade battery pack of the present application improves the assembly efficiency of the battery pack, and on the other hand, the structure of the partition beam improves the strength of the blade battery pack.

On this basis, the bottom plate includes a plurality of strip-shaped through holes spaced apart along the first direction, the bottom of each cell assembly is provided with multiple rows of explosion-proof valves, and each row of explosion-proof valves is in communication with a corresponding strip-shaped through hole. On one hand, the plurality of strip-shaped through holes provided in the bottom plate makes the blade battery pack more lightweight, and on the other hand, when the gas pressure inside the cell assembly exceeds a threshold, the vent gas inside the cell assembly is capable of being discharged to the outside of the blade battery pack via the bottom strip-shaped through holes, thus facilitating gas discharge and greatly improving the safety of the battery pack.

According to a third aspect of the present application, a battery pack is provided. The battery pack includes a cell module, at least one thermal protection component, a plurality of support bars, a bottom protection plate, and a housing; the bottom of the cell module is provided with at least one row of explosion-proof valves, the cell module is disposed on the thermal protection component, and each thermal protection component is disposed corresponding to one row of the explosion-proof valves; the plurality of support bars are disposed on the bottom protection plate and spaced apart along a first direction, each thermal protection component is bridged via two adjacent support bars, and the thermal protection component is disposed on a side of the support bars facing away from the bottom protection plate, such that the two adjacent support bars, the bottom protection plate, and a corresponding thermal protection component together enclose an exhaust passage, where the thermal protection component is provided with a thinned portion; the bottom protection plate is connected to the housing and located below the cell module; the housing includes an exhaust portion, and each exhaust passage is in communication with the exhaust portion.

Optionally, the cell module includes a plurality of cell assemblies arranged side by side along the first direction, each of the cell assemblies includes a plurality of cells stacked along a second direction, and terminals of the cells are disposed on end faces of the cells in the first direction; the exhaust passage extends along the second direction, and the second direction is perpendicular to the first direction.

Optionally, the housing includes a side beam and a rear crossbeam both extending along the first direction; the exhaust portion is disposed on the side beam; the rear crossbeam is disposed between the exhaust passage and the side beam; the rear crossbeam includes a gas passage opening disposed offset from the exhaust portion; a gas passage gap is provided between the end of the exhaust passage and the rear crossbeam, such that the exhaust passage is in communication with the exhaust portion sequentially via the gas passage gap and the gas passage opening.

Optionally, a bottom plate is connected to the housing and disposed at the bottom of the cell module, the bottom plate is provided with a plurality of strip-shaped through holes, and each of the strip-shaped through holes is disposed corresponding to one row of the explosion-proof valves, such that a corresponding thermal protection component is capable of fitting with the explosion-proof valves via the strip-shaped through hole.

Optionally, the housing further includes a middle crossbeam extending along the first direction, the middle crossbeam is disposed on the bottom plate, and each of the cell assemblies is divided into two parts by the middle crossbeam.

In any of the above technical solutions, optionally, a front crossbeam extends along the first direction, the exhaust passage is disposed between the front crossbeam and a rear crossbeam; a longitudinal beam extends along the second direction, the two ends of the longitudinal beam are respectively connected to the front crossbeam and the rear crossbeam, and two adjacent cell assemblies are separated via the longitudinal beam.

Optionally, the battery pack further includes a support foam disposed between the bottom protection plate and the bottom plate, and the bottom plate and the bottom protection plate are bonded together via the support foam.

Optionally, the battery pack further includes a structural adhesive disposed between the cell module and the bottom plate, and the cell module and the bottom plate are bonded together via the structural adhesive.

Optionally, each thermal protection component includes a plurality of thinned portions, and the plurality of thinned portions included in each thermal protection component are disposed in one-to-one correspondence with a plurality of the explosion-proof valves in a corresponding row.

Optionally, the battery pack further includes a cooling plate and a thermally conductive structural adhesive, and the cooling plate is bonded above the cell module via the thermally conductive structural adhesive.

According to the battery pack of the present application, by disposing the plurality of support bars on the bottom protection plate at intervals along the first direction, and bridging a thermal protection component via sides of two adjacent support bars facing away from the bottom protection plate, the two adjacent support bars, the bottom protection plate, and a corresponding thermal protection component together enclose an exhaust passage. Thus, when the gas pressure inside the cell module exceeds a threshold, the vent gas inside the cell module is capable of sequentially passing through the explosion-proof valves and the thinned portions of the thermal protection component to enter the exhaust passage, such that the gas is capable of being discharged via the exhaust portion in communication with the exhaust passage. In this way, when the gas pressure inside the cell module exceeds a threshold and requires pressure relief, the vent gas bursting through the explosion-proof valves is capable of being discharged through an independent exhaust path (i.e., the exhaust passage and the exhaust portion), effectively improving the discharge speed of the vent gas from the battery pack. This prevents the vent gas from flowing into the housing and impacting electrical structures of the cell module, ensures the stability of electrical connections of the cell module, achieves electrical and thermal separation within the battery pack, and greatly improves the safety of the battery pack.

To make the above objectives, features, and advantages of the present application more apparent and understandable, preferred embodiments are described in detail below with reference to the accompanying drawings.

### BRIEF DESCRIPTION OF THE DRAWINGS

To more clearly illustrate technical solutions of embodiments of the present application, drawings used in the embodiments are briefly introduced below. It should be understood that the following drawings only show certain embodiments of the present application and therefore should not be considered as limiting a scope. For those skilled in the art, other related drawings can be obtained based on these drawings without creative effort.
Fig. 1 is a partial structural schematic diagram of a battery pack according to an embodiment of the present application;
Fig. 2 is a partial structural schematic diagram of Fig. 1;
Fig. 3 is a structural schematic diagram of a cell module according to an embodiment of the present application;
Fig. 4 is a top view of Fig. 2;
Fig. 5 is an enlarged schematic diagram of a partial structure of Fig. 4;
Fig. 6 is a cross-sectional structural schematic diagram of Fig. 4;
Fig. 7 shows an exploded structural schematic diagram of a battery pack according to an embodiment of the present application;
Fig. 8 shows a partial structural schematic diagram of a battery pack according to an embodiment of the present application;
Fig. 9 shows an installation structural schematic diagram of a housing according to an embodiment of the present application;
Fig. 10 shows a structural schematic diagram of a cell assembly according to an embodiment of the present application;
Fig. 11 shows an exploded structural schematic diagram of a battery pack according to an embodiment of the present application;
Fig. 12 shows a partial structural schematic diagram of a battery pack according to an embodiment of the present application;
Fig. 13 shows a structural schematic diagram of a cell module according to an embodiment of the present application;
Fig. 14 shows a schematic diagram of Fig. 13 from another perspective;
Fig. 15 shows a top view of a battery pack according to an embodiment of the present application;
Fig. 16 shows a cross-sectional view taken along line A-A of Fig. 15;
Fig. 17 shows a schematic diagram of Fig. 15 from another perspective; and
Fig. 18 shows a cross-sectional view taken along line B-B of Fig. 17.

Reference numerals: 100-cell module; 101-cell assembly; 1011-explosion-proof valve; 200-housing; 201-front edge beam; 202-rear edge beam; 203-side beam; 204-exhaust portion; 300-bottom plate; 400-mica plate; 401-thinned portion; 500-support bar; 600-gas passage crossbeam; 601-sealing strip; 602-ventilation hole; 700-front crossbeam; 800-rear crossbeam; 801-gas passage opening; 900-elastic support column; 1000-longitudinal beam; 1100-position-limiting strip; 1200-bottom protection plate; X-first direction; Y-second direction; Z-third direction;
20100-housing; 20101-front edge beam; 201011-exhaust portion; 20102-rear edge beam; 20103-side edge beam; 20200-middle crossbeam; 20300-front crossbeam; 20400-rear crossbeam; 20500-longitudinal beam; 20600-strip-shaped plate member; 20700-cooling plate; 20800-thermally conductive structural adhesive; 20900-bottom protection plate; 201000-cell assembly; 201001-explosion-proof valve; 201100-mica plate; 201200-support bar; 201400-bolt; 201500-blind rivet;
30100-cell module; 30101-explosion-proof valve; 30102-terminal; 30200-housing; 30201-exhaust portion; 30202-rear edge beam; 30203-rear crossbeam; 30204-middle crossbeam; 30205-front crossbeam; 30206-front edge beam; 30300-bottom plate; 30400-bottom protection plate; 30500-mica plate; 30600-support bar; 30700-support foam; 30800-cooling plate; 30900-thermally conductive structural adhesive; 301000-thermal insulation cotton; F1-first direction; F2-second direction; F3-third direction.

### DETAILED DESCRIPTION OF EMBODIMENTS

The following specific embodiments are provided to help readers obtain comprehensive understanding of the methods, devices, and/or systems described herein. However, after understanding the disclosure of the present application, various changes, modifications, and equivalents of the methods, devices, and/or systems described herein will be apparent. For example, the sequence of operations described herein is merely exemplary and is not limited to the sequence set forth herein, but rather changes that will be apparent after understanding the disclosure of the present application may be made, except for operations that must occur in a specific order. Furthermore, descriptions of features known in the art may be omitted for clarity and conciseness.

The features described herein may be implemented in different forms and should not be interpreted as being limited to the examples described herein. Rather, the examples described herein have been provided merely to illustrate some of the many feasible ways of implementing the methods, devices, and/or systems described herein that will be apparent after understanding the disclosure of the present application.

Throughout the specification, when an element (such as a layer, region, or substrate) is described as being "on" another element, "connected to" another element, "coupled to" another element, "above" another element, or "covering" another element, the element may be directly "on" another element, "connected to" another element, "coupled to" another element, "above" another element, or "covering" another element, or one or more other elements may be present therebetween. In contrast, when an element is described as being "directly on" another element, "directly connected to" another element, "directly coupled to" another element, "directly above" another element, or "directly covering" another element, no other elements may be present therebetween.

As used herein, the term "and/or" includes any one of the listed related items and any combination of any two or more items.

Although terms such as "first", "second", and "third" may be used herein to describe various components, elements, regions, layers, or sections, these components, elements, regions, layers, or sections are not limited by these terms. Rather, these terms are only used to distinguish one component, element, region, layer, or section from another component, element, region, layer, or section. Thus, without departing from the teachings of the examples, a first component, element, region, layer, or section referred to in the examples described herein could also be termed a second component, element, region, layer, or section.

For ease of description, spatial relationship terms such as "above", "upper", "below", and "lower" may be used herein to describe a relationship of one element to another element as shown in the drawings. Such spatial relationship terms are intended to encompass different orientations of a device in use or operation in addition to an orientation depicted in the drawings. For example, if the device in the drawings is turned over, an element described as being "above" or "upper" relative to another element would subsequently be "below" or "lower" relative to the another element. Thus, the term "above" encompasses both orientations of "above" and "below" depending on a spatial orientation of the device. The device may also be otherwise oriented (e.g., rotated 90 degrees or at other orientations) and the spatial relationship terms used herein shall be interpreted accordingly.

The terminology used herein is only for describing various examples and is not intended to limit the present disclosure. Unless the context clearly indicates otherwise, singular forms are also intended to include plural forms. The terms "comprise", "include", and "have" specify the presence of stated features, quantities, operations, components, elements, and/or combinations thereof, but do not preclude the presence or an addition of one or more other features, quantities, operations, components, elements, and/or combinations thereof.

Due to manufacturing techniques and/or tolerances, variations in shapes shown in the drawings may occur. Therefore, the examples described herein are not limited to specific shapes shown in the drawings, but include changes in shape that occur during manufacturing.

The features of the examples described herein may be combined in various ways that will be apparent after understanding the disclosure of the present application. Furthermore, although the examples described herein have various constructions, other constructions are possible, as will be apparent after understanding the disclosure of the present application.

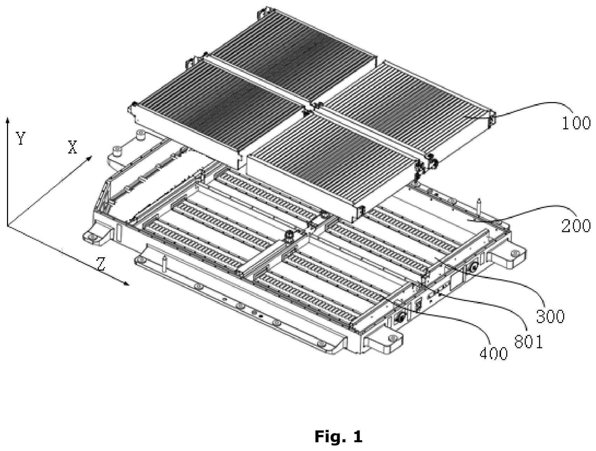

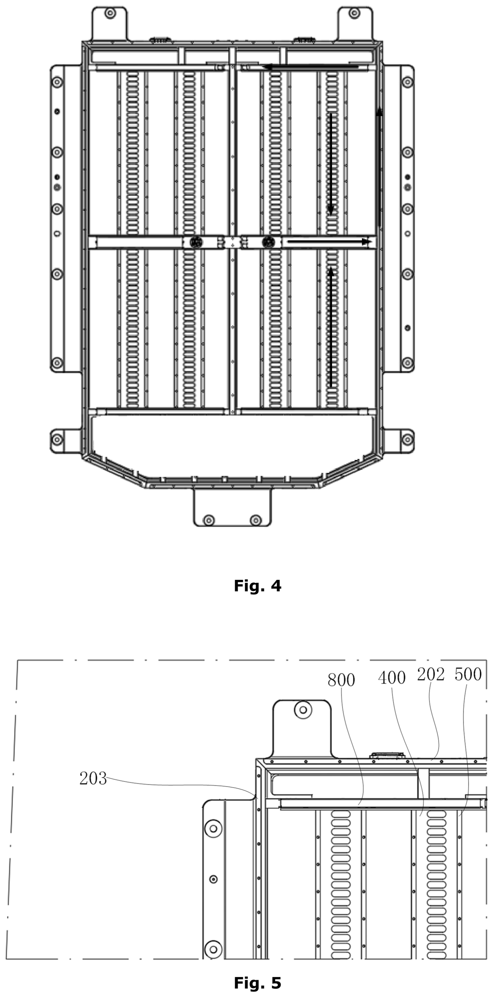

A battery pack according to some embodiments of the present application is described below with reference to Figs. 1 to 6.

Referring to Figs. 1 to 6, an embodiment of a first aspect of the present application provides a battery pack. The battery pack includes a cell module 100, a plurality of thermal protection components (a thermal protection component may be a mica plate 400, and the mica plate 400 will be described as an example hereinafter), a plurality of support bars 500, a bottom plate 300, a housing 200, and a gas passage crossbeam 600. The bottom plate 300 is connected to the housing 200 such that the bottom plate 300 and the housing 200 together enclose an accommodation space for accommodating the cell module 100. The bottom of the cell module 100 is provided with multiple rows of explosion-proof valves 1011, the cell module 100 is disposed on the mica plate 400, and the plurality of mica plates 400 correspond to the multiple rows of the explosion-proof valves 1011 in a one-to-one manner. The plurality of mica plates 400 are disposed on the bottom plate 300 at intervals along a first direction X, and each mica plate 400 is provided with support bars 500 on both opposite sides thereof in the first direction X, the cell module 100 is disposed on the bottom plate 300 via the support bars 500, such that two support bars 500 disposed on both sides of the mica plate 400, the mica plate 400, and the bottom of the cell module 100 together enclose an exhaust passage. The gas passage crossbeam 600 is disposed on the bottom plate 300, and the exhaust passage is in communication with the gas passage crossbeam 600. The housing 200 includes an exhaust portion 204, and the exhaust passage is in communication with the exhaust portion 204 via the gas passage crossbeam 600.

According to the battery pack provided by the above technical features, the cell module 100 is supported above the bottom plate 300 through two support bars 500, such that the two support bars 500 disposed on both sides of the mica plate 400, the mica plate 400, and the bottom of the cell module 100 together enclose an exhaust passage. When the gas pressure inside the cell module 100 exceeds a threshold, the gas inside the cell module 100 is capable of breaking through the explosion-proof valve 1011 and entering the exhaust passage. On one hand, the vent gas is guided to the exhaust portion 204 via the exhaust passage, effectively improving the discharge speed of the vent gas from the battery pack; on the other hand, the exhaust passage effectively isolates the vent gas from the accommodation space, effectively preventing the vent gas from impacting electrical connection structures of the cell module 100, ensuring the electrical connection stability of the cell module 100, thereby achieving the electrical and thermal separation within the battery pack and improving the safety of the battery pack.

Referring to Fig. 1, the direction shown as X in the figure may be an example of the first direction, the direction shown as Y in the figure may be an example of a second direction, and the direction shown as Z in the figure may be an example of a third direction. Optionally, any two of the first direction X, the second direction Y, and the third direction Z are perpendicular to each other, where when the battery pack is in use, the second direction Y may be parallel to the direction of gravity.

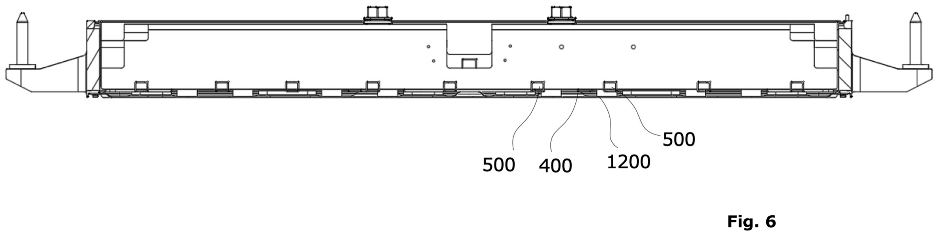

Optionally, the bottom plate 300 may include a strip-shaped through hole, and the mica plate 400 is disposed in the strip-shaped through hole. As shown in Fig. 6, the battery pack may further include a bottom protection plate 1200 disposed on a side of the bottom plate 300 facing away from the cell module 100, the bottom protection plate 1200 and the bottom plate 300 are spaced apart in the second direction Y, such that a buffer cavity is formed between the bottom protection plate 1200 and the bottom plate 300. Thus, when the gas volume of the vent gas discharged from the cell module 100 exceeds a predetermined value, the vent gas is capable of breaking through the mica plate 400 and entering the buffer cavity. On one hand, the buffer cavity is capable of effectively providing a buffer space for the high-pressure vent gas, effectively relieving the pressure on the exhaust passage to discharge the vent gas and ensuring the stability of the exhaust passage; on the other hand, during the process when the cell module 100 bursts through the explosion-proof valve 1011, the vent gas usually carries solid substances from inside the cell module 100, and the gas volume of the vent gas will break through the mica plate 400 and then impact the bottom protection plate 1200, with most of the solid substances adhering to the bottom protection plate 1200 during an impact process, effectively preventing the solid substances from being directly discharged into the exhaust passage, which would cause blockage of the exhaust passage, and ensuring the smooth gas discharge from the exhaust passage.

Optionally, the mica plate 400 may include a plurality of thinned portions 401, and the plurality of thinned portions 401 included in each mica plate 400 are disposed in one-to-one correspondence with the plurality of explosion-proof valves 1011 in a corresponding row, so as to facilitate the vent gas breaking through the mica plate 400.

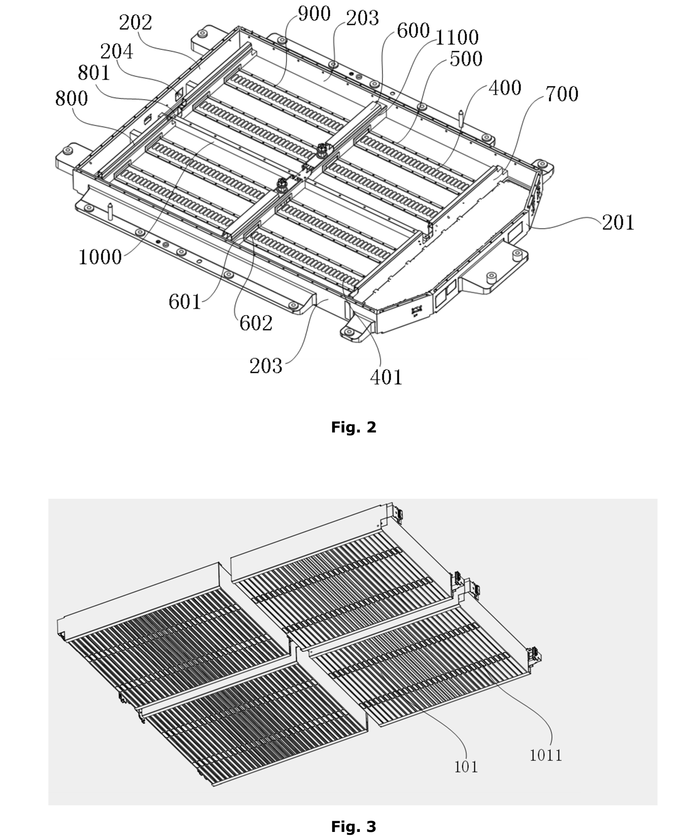

Optionally, as shown in Figs. 1 and 2, the housing 200 may include a front edge beam 201, a rear edge beam 202, and two side beams 203 disposed opposite to each other, the two ends of the front edge beam 201 are respectively connected to first ends of the two side beams, and the two ends of the rear edge beam 202 are respectively connected to second ends of the two side beams, so as to enclose the accommodation space.

Optionally, as shown in Figs. 1 and 2, the exhaust portion 204 is disposed on the rear edge beam 202, the gas passage crossbeam 600 includes a first cavity extending along the first direction X, each side beam 203 includes a second cavity extending along a third direction Z, the first cavity is in communication with the exhaust portion 204 via the second cavity, and the third direction Z is perpendicular to the first direction X. Thus, the vent gas is guided to the gas passage crossbeam 600 via the exhaust passage. Subsequently, under the guidance of the gas passage crossbeam 600 (i.e., the first cavity), the gas flows to the two side beams 203. On one hand, the remaining solid substances mixed in the vent gas is capable of adhering to an inner wall of the side beam 203 under an impact of the gas flow; on the other hand, under the guidance of the two side beams 203, the vent gas is capable of flowing to the exhaust portion 204 via the second cavity.

Optionally, as shown in Figs. 1 and 2, the battery pack may further include a front crossbeam 700 and a rear crossbeam 800 both extending along the first direction X, two ends of the cell module 100 respectively abut against the front crossbeam 700 and the rear crossbeam 800. Thus, the position of the cell module 100 within the accommodation space is effectively defined, improving an installation stability of the cell module 100.

Optionally, the rear crossbeam 800 may further include a third cavity extending along the first direction X and a gas passage opening 801, the gas passage opening 801 is disposed offset from the exhaust portion 204, and the second cavity is in communication with the exhaust portion 204 sequentially via the third cavity and the gas passage opening 801. Thus, firstly, the remaining solid substances mixed in the vent gas is capable of adhering to an inner wall of the rear crossbeam 800 under the impact of the gas flow, such that the vent gas flowing to the exhaust portion 204 has almost no remaining solid substance under the effect of the three-stage adhesion, ensuring the safety of the vent gas discharge; secondly, the exhaust passage is prevented from being exposed by the exhaust portion 204, ensuring the stability of the internal environment of the battery pack; thirdly, the gas pressure of the vent gas is relieved, preventing the housing 200 from bursting due to an excessively high local gas pressure at the location of the exhaust portion 204.

In an embodiment, optionally, as shown in Figs. 1 and 3, the cell module 100 includes a plurality of cell assemblies 101, each cell assembly 101 includes a plurality of cells stacked along the third direction Z, and the terminals of the cells are disposed on end faces of the cells in the first direction X. Thus, the terminals of the cells are disposed on the end faces of the cells in the first direction X, while the explosion-proof valves 1011, which are disposed opposite to the mica plate 400, are disposed on side faces of the cells in the second direction Y. In other words, electrical connection positions of the cells (i.e., positions of the terminals) and the connection positions between an exhaust path of the vent gas and the cells (i.e., positions of the explosion-proof valves 1011) are disposed on different surfaces of the cells, further achieving the electrical and thermal separation of the cells and improving the safety of the cells.

Optionally, as shown in Fig. 1, the battery pack may further include a longitudinal beam 1000, the longitudinal beam 1000 extends along the third direction Z, the gas passage crossbeam 600 and the longitudinal beam 1000 divide the accommodation space into a plurality of placement portions, one cell assembly 101 is correspondingly disposed in each placement portion, and a side surface of each cell assembly 101 close to the gas passage crossbeam 600 abuts against the gas passage crossbeam 600, so as to ensure the installation stability of each cell assembly 101.

Figs. 1 and 3 show an example where there are four cell modules 100, however, this is not limiting, and the number of cell modules 100 may be adaptively adjusted according to actual requirements of the battery pack. For example, the number of cell modules 100 may also be two, three, six, or more.

Optionally, as shown in Figs. 1 and 2, both sides of the gas passage crossbeam 600 that are opposite to each other in the third direction Z are provided with a plurality of ventilation holes 602, and each ventilation hole 602 is in communication with a corresponding exhaust passage, such that the exhaust passage is in communication with the first cavity via the ventilation hole 602.

Optionally, the edge of the ventilation hole 602 is provided with a sealing strip 601, and the side surface of the cell assembly 101 close to the gas passage crossbeam 600 fits against the gas passage crossbeam 600 via the sealing strip. Thus, the vent gas is effectively prevented from overflowing into the accommodation space through a gap between the cell assembly 101 and the gas passage crossbeam 600, ensuring airtightness at the communication between the exhaust passage and the gas passage crossbeam 600, further achieving the electrical and thermal separation.

Specifically, the sealing strip 601 may be disposed for one round along the edge of the ventilation hole 602.

Optionally, a support body described below and the sealing strip 601 may both be a support foam. Through the elastic effect of the support foam, the adaptability and fitting tightness of the exhaust passage are enhanced, such that the mica plate 400 is capable of fitting tightly with the cell module 100 via the support foam even under the impact of the vent gas, further reducing the probability of the vent gas overflowing into the accommodation space.

Optionally, as shown in Fig. 2, the battery pack may further include a position-limiting strip 1100, the position-limiting strip 1100 is fixedly disposed on both sides of the gas passage crossbeam 600 that are opposite to each other in the third direction Z, and the position-limiting strip 1100 extends along the first direction X. The arrangement of the sealing strip 601 creates a gap between the gas passage crossbeam 600 and the cell assembly 101. The position-limiting strip is capable of filling the gap, effectively preventing the deformation of the cell assembly 101 toward the gap, when the gas pressure inside the cell assembly 101 is excessive, effectively defining the position of the cell assembly 101 in the third direction Z.

Optionally, the position-limiting strip 1100 may also be the support foam described above.

Optionally, as shown in Fig. 2, the support bar 500 may include a support body and a plurality of elastic support columns 900, the elastic support columns 900 are embedded in the support body, and the plurality of elastic support columns 900 are spaced apart along an extending direction of the support body, so as to improve an elastic support capability of the support bar 500, ensuring the support effectiveness and the continuity of the support bar 500.

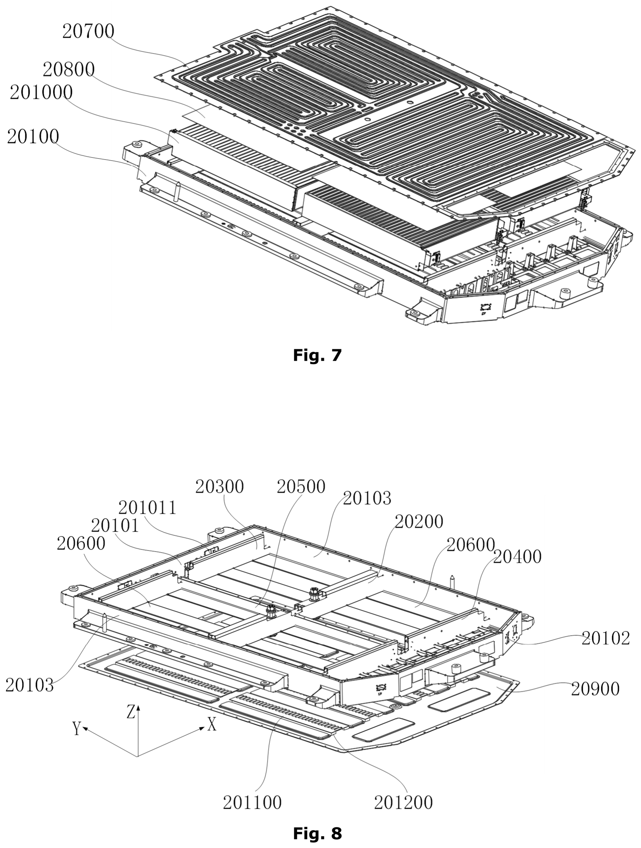

A battery pack according to some embodiments of the present application is described below with reference to Figs. 7 to 10. The battery pack includes a housing 20100, a middle crossbeam 20200, a longitudinal beam 20500, a plurality of cell assemblies 201000, and a bottom plate, where the bottom plate is connected to the housing 20100, and the bottom plate and the housing 100 together enclose an accommodation space for accommodating the cell assemblies 201000; the middle crossbeam 20200 and the longitudinal beam 20500 are both connected to the housing 20100 to divide the accommodation space into four accommodation portions, and each accommodation portion is correspondingly provided with one cell assembly 201000. The bottom plate includes a plurality of strip-shaped through holes spaced apart along a first direction, a bottom of each cell assembly 201000 is provided with multiple rows of explosion-proof valves 201001, and each row of the explosion-proof valves 201001 are in communication with a corresponding strip-shaped through hole.

According to the above technical features, the blade battery pack is divided into four accommodation portions by the crossbeam and the longitudinal beam 20500, and each accommodation portion is correspondingly provided with one cell assembly 201000. On one hand, the blade battery pack of the present application improves the assembly efficiency of the battery pack, and on the other hand, a cross structure of the crossbeam and the longitudinal beam 20500 improves the strength of the blade battery pack.

On this basis, the bottom plate includes a plurality of strip-shaped through holes spaced apart along the first direction, the bottom of each cell assembly 201000 is provided with multiple rows of the explosion-proof valves 201001, and each row of the explosion-proof valves 201001 are in communication with a corresponding strip-shaped through hole. On one hand, the plurality of strip-shaped through holes provided in the bottom plate makes the blade battery pack more lightweight, and on the other hand, when the gas pressure inside the cell assembly 201000 exceeds a threshold, the vent gas inside the cell assembly 201000 is capable of being discharged to the outside of the blade battery pack via the bottom strip-shaped through holes, thus facilitating gas discharge and greatly improving the safety of the battery pack.

In the embodiments of the present application, referring to Figs. 7 to 10, the direction shown as X in Fig. 8 may be an example of the first direction, the direction shown as Y in the figure may be an example of a second direction, and the direction shown as Z in the figure may be an example of a third direction. Optionally, any two of the first direction X, the second direction Y, and the third direction Z are perpendicular to each other.

Optionally, the middle crossbeam 20200 extends along the first direction, the longitudinal beam 20500 extends along the second direction, the battery pack further includes a front crossbeam 20300 and a rear crossbeam 20400 extending along the first direction, the front crossbeam 20300 and the rear crossbeam 20400 are both connected to the housing 20100, and four cell assemblies 201000 are disposed between the front crossbeam 20300 and the rear crossbeam 20400.

Optionally, as shown in Fig. 8, the housing 20100 includes a front edge beam 20101, a rear edge beam 20102, and two side edge beams 20103 connected to one another, where the front edge beam 20101 and the rear edge beam 20102 both extend along the first direction, and the side edge beams 20103 extend along the second direction. The two ends of the middle crossbeam 20200 are respectively welded to middle portions of the two side edge beams 20103, the two ends of the front crossbeam 20300 are respectively welded to front ends of the two side edge beams 20103, the two ends of the rear crossbeam 20400 are respectively welded to rear ends of the two side edge beams 20103, and the two ends of a longitudinal beam 500 are respectively welded to middle portions of the front crossbeam 20300 and the rear crossbeam 20400.

Optionally, as shown in Fig. 8, the bottom plate includes a plurality of strip-shaped plate members 20600 extending along the second direction, a strip-shaped through hole is formed between two adjacent strip-shaped plate members 20600, and each strip-shaped plate member 20600 is simultaneously connected to the front crossbeam 20300, the middle crossbeam 20200, and the rear crossbeam 20400.

Based on this, among the plurality of cells included in each cell assembly 201000 of the present application, a longitudinal direction of each cell extends along the first direction. Thus, the longitudinal direction of the cells and the strip-shaped through hole are perpendicular (i.e., arranged in a staggered manner), thereby improving the rigidity of the battery pack.

Optionally, among the plurality of strip-shaped plate members 20600, two strip-shaped plate members 20600 are respectively connected to the two side edge beams 20103. As an example, as shown in Fig. 8, two strip-shaped plate members 20600 located on both sides and the housing 20100 are integrally formed by profile extrusion. One strip-shaped plate member 20600 is connected to the longitudinal beam 20500 for an installation of the longitudinal beam 20500.

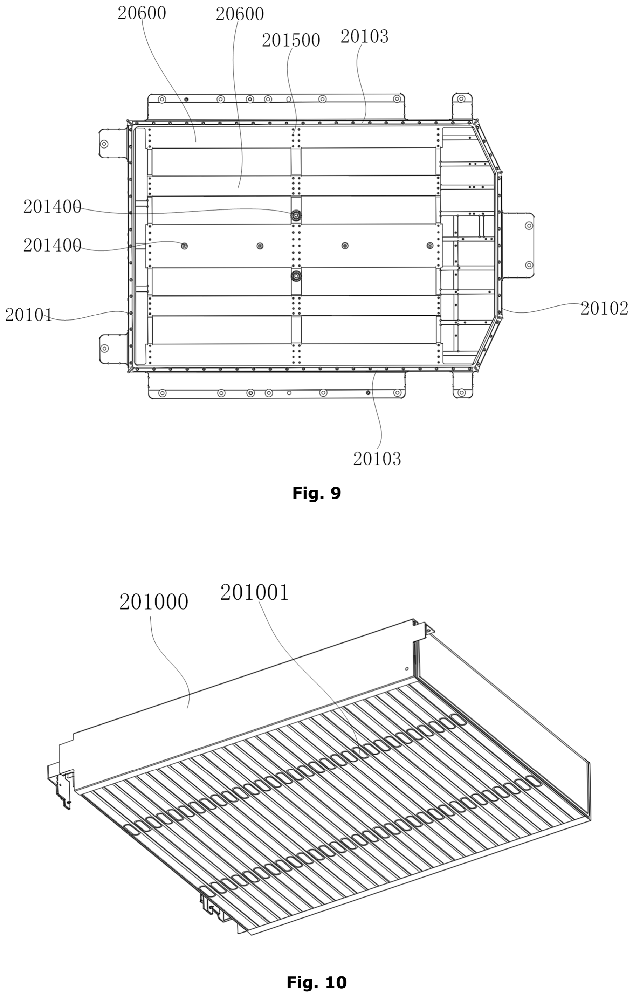

In the embodiments of the present application, as shown in Fig. 9, the front crossbeam 20300, the middle crossbeam 20200, and the rear crossbeam 20400 may all be connected to the plurality of strip-shaped plate members 20600 through a row of blind rivets 201500, where the middle crossbeam 20200 is connected to the plurality of strip-shaped plate members 20600 through two rows of blind rivets 201500. Here, the front crossbeam 20300, the middle crossbeam 20200, and the rear crossbeam 20400 may all have a hollow structure, further improving the lightweight design of the battery pack.

In the embodiments of the present application, as shown in Fig. 7, the battery pack may further include a cooling plate 20700 and a thermally conductive structural adhesive 20800, and the cooling plate 20700 is bonded above the cell module via the thermally conductive structural adhesive 20800. Thus, disposing the cooling plate 20700 at the top of the cell module facilitates the flow of cold air cooled by the cooling plate 20700 throughout the entire battery pack, thereby improving the cooling efficiency of the cooling plate 20700.

Continuing to refer to Fig. 7, the battery pack may further include a bottom protection plate 20900, and the bottom protection plate 20900 is connected to the housing 20100 and located at the bottom of the cell assemblies 201000. As shown in Fig. 9, an external bolt 201400 is capable of sequentially passing through the cooling plate 20700 and the middle crossbeam 20200 and connecting to a bottom protection plate 900, and an external bolt 201400 is capable of sequentially passing through the cooling plate 20700, the longitudinal beam 20500, and a corresponding strip-shaped plate member 20600 and connecting to the bottom protection plate 20900. This improves the overall strength of the battery pack.

In some embodiments of the present application, the battery pack may further include a structural adhesive and an adhesive-applying position-limiting strip (not shown in the figure), where the adhesive-applying position-limiting strip is disposed at the edge of the strip-shaped plate member 20600, and the structural adhesive is disposed inside the adhesive-applying position-limiting strip. That is, the adhesive-applying position-limiting strip disposed at the edge of the strip-shaped plate member 20600 provides a support and positioning function, and then the cell assemblies 201000 and the bottom plate are bonded together via the structural adhesive. Thus, not only is the reliability of the connection of the cell assemblies 201000 improved, but also due to the positioning of the adhesive-applying position-limiting strip, an excess structural adhesive will not overflow from the strip-shaped plate member 20600, improving the lightweight design of the battery pack.

An exhaust passage and an exhaust path of the explosion-proof valves 201001 will be described below.

As shown in Fig. 8, the battery pack may further include a plurality of thermal protection components (the thermal protection components may be a mica plate 201100, and the mica plate 201100 will be described as an example hereinafter) and a plurality of support bars 201200. The plurality of support bars 201200 are disposed on the bottom protection plate 900 and spaced apart along the first direction, each mica plate 201100 is bridged via two adjacent support bars 201200, and the mica plates 201100 are disposed on a side of the support bars 201200 facing away from the bottom protection plate 20900, such that the two adjacent support bars 201200, the bottom protection plate 20900, and a corresponding mica plate 201100 together enclose an exhaust passage. The cell assemblies 201000 are disposed on the mica plates 201100, among the multiple rows of the explosion-proof valves 201001 included in each cell assembly 201000, each row of the explosion-proof valves 201001 is connected to a corresponding mica plate 201100 through a corresponding strip-shaped through hole, the housing 20100 includes an exhaust portion 201011, and each exhaust passage is in communication with the exhaust portion 201011 (for example, an end of each exhaust passage has a gas passage gap with the front crossbeam 20300, and the gas passage gap is in communication with the exhaust portion 201011).

According to the above technical features, by disposing the plurality of support bars 201200 on the bottom protection plate 20900 at intervals along the first direction, and bridging the mica plates 201100 via sides of two adjacent support bars 201200 facing away from the bottom protection plate 20900, the two adjacent support bars 201200, the bottom protection plate 20900, and a corresponding mica plate 201100 together enclose an exhaust passage. Thus, when the gas pressure inside the cell assembly 201000 exceeds a threshold, the vent gas inside the cell assembly 201000 is capable of sequentially passing through the explosion-proof valve 201001 and the mica plates 201100 to enter the exhaust passage, and then the vent gas is discharged from the exhaust portion 201011 via the gas passage gap.

In this way, when the gas pressure inside the cell assembly 201000 exceeds a threshold and requires pressure relief, the vent gas bursting through the explosion-proof valves 201001 is capable of being discharged through an independent exhaust path (i.e., the explosion-proof valves 201001, the exhaust passage, and the exhaust portion 201011), effectively improving the discharge speed of the vent gas from the battery pack.

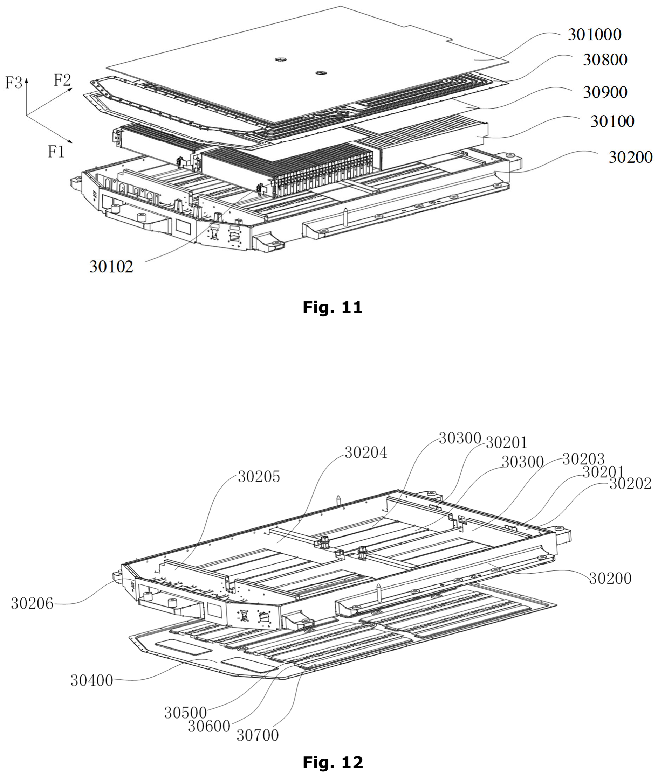

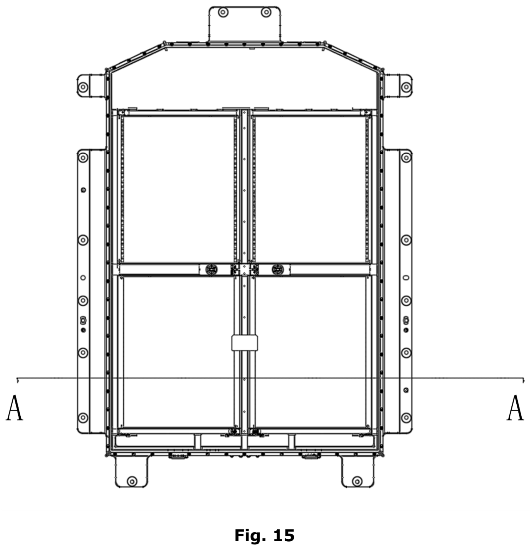

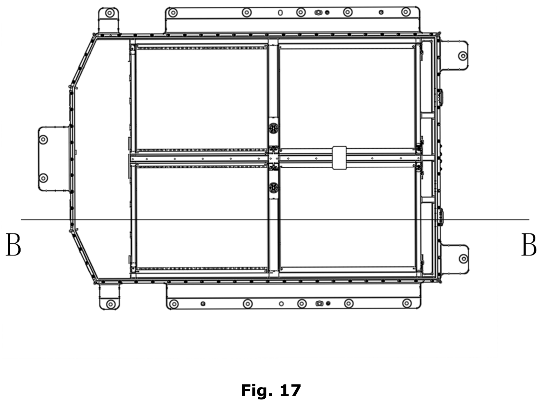

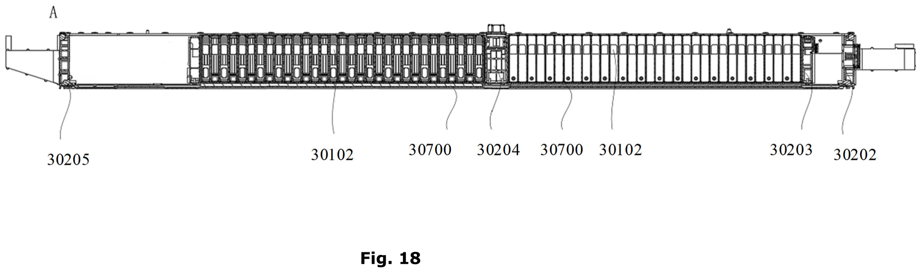

A battery pack according to some embodiments of the present application is described below with reference to Figs. 11 to 18. The battery pack includes a cell module 30100, a plurality of thermal protection components (a thermal protection component may be a mica plate 30500, and the mica plate 30500 will be described as an example hereinafter), a plurality of support bars 30600, a bottom protection plate 30400, and a housing 30200. The bottom of the cell module 30100 is provided with multiple rows of explosion-proof valves 30101, the cell module 30100 is disposed on the mica plates 30500, and the plurality of mica plates 30500 correspond to the multiple rows of the explosion-proof valves 30101 in a one-to-one manner. The plurality of support bars 30600 are disposed on the bottom protection plate 30400 and spaced apart along a first direction F1, each mica plate 30500 is bridged via two adjacent support bars 30600, and the mica plates 30500 are disposed on a side of the support bars 30600 facing away from the bottom protection plate 30400, such that the two adjacent support bars 30600, the bottom protection plate 30400, and a corresponding mica plate 30500 together enclose an exhaust passage. The bottom protection plate 30400 is connected to the housing 30200 and located below the cell module 30100. The housing includes an exhaust portion 30201, and each exhaust passage is in communication with the exhaust portion 30201.

According to the above technical features, by disposing the plurality of support bars 30600 on the bottom protection plate 30400 at intervals along the first direction F1, and bridging the mica plates 30500 via sides of two adjacent support bars 30600 facing away from the bottom protection plate 30400, the two adjacent support bars 30600, the bottom protection plate 30400, and a corresponding mica plate 30500 together enclose an exhaust passage. Thus, when the gas pressure inside the cell module 30100 exceeds a threshold, the vent gas inside the cell module 30100 is capable of sequentially passing through an explosion-proof valve 30101 and the mica plates 30500 to enter the exhaust passage, such that the gas is capable of being discharged via the exhaust portion 30201 in communication with the exhaust passage. In this way, when the gas pressure inside the cell module 30100 exceeds a threshold and requires pressure relief, the vent gas bursting through an explosion-proof valve 30101 is capable of being discharged through an independent exhaust path (i.e., the explosion-proof valve 30101, the exhaust passage, and the exhaust portion 30201), effectively improving the discharge speed of the vent gas from the battery pack. This prevents the vent gas from flowing into the housing 30200 and impacting electrical structures of the cell module 30100, ensures the stability of electrical connections of the cell module 30100, achieves electrical and thermal separation within the battery pack, and greatly improves the safety of the battery pack.

Optionally, each mica plate 30500 may include a plurality of thinned portions, and the plurality of thinned portions included in each mica plate 30500 correspond to a plurality of the explosion-proof valves 30101 in a corresponding row in a one-to-one manner. Thus, the vent gas is facilitated to break through the thinned portions and enter the exhaust passage.

Referring to Figs. 11 to 18, the direction shown as F1 in Fig. 11 may be an example of a first direction, the direction shown as F2 in the figure may be an example of a second direction, and the direction shown as F3 in the figure may be an example of a third direction. Optionally, any two of the first direction F1, the second direction F2, and the third direction F3 are perpendicular to each other.

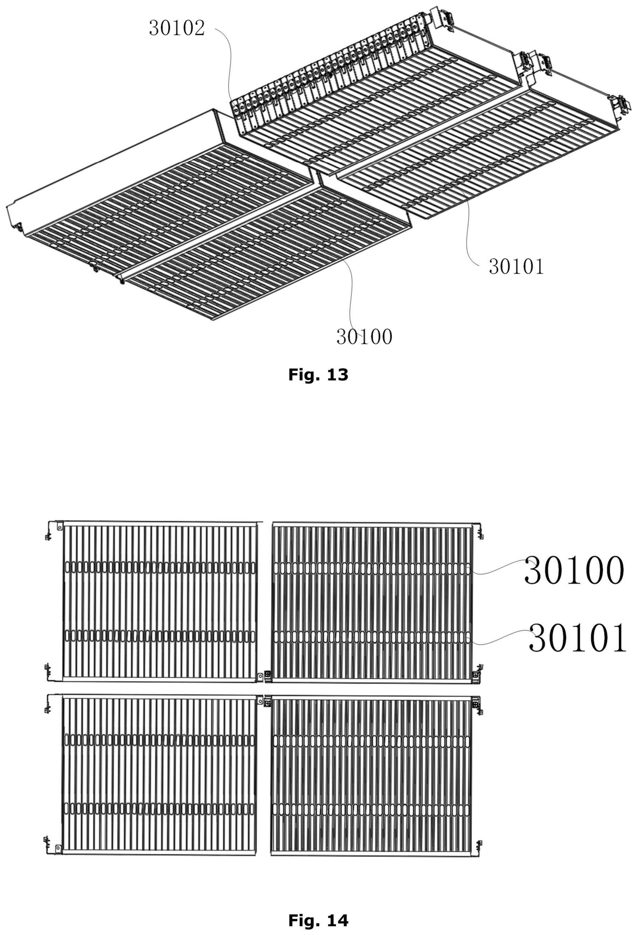

Optionally, as shown in Fig. 13, the cell module 30100 may include a plurality of cell assemblies arranged side by side along the first direction F1, each of the cell assemblies includes a plurality of cells stacked along the second direction F2, and terminals 30102 of the cells are disposed on end faces of the cells in the first direction F1. Thus, the terminals 30102 of the cells are disposed on the end face of the cells in the first direction F1, while the explosion-proof valves 30101, which are disposed opposite to the mica plate 30500, are disposed on side faces of the cells in the third direction F3. In other words, electrical connection positions of the cells (i.e., positions of the terminals) and the connection positions between an exhaust path of the vent gas and the cells (i.e., positions of the explosion-proof valves 30101) are disposed on different surfaces of the cells, further achieving the electrical and thermal separation of the cells and improving the safety of the cells.

Figs. 11 and 13 show an example where there are two cell modules 30100, however, this is not limiting, and the number of cell modules 30100 may be adaptively adjusted according to actual requirements of the battery pack. For example, the number of cell modules 30100 may also be three, four, or more. The plurality of cell assemblies are spaced apart along the first direction F1, and two adjacent cell assemblies may be spaced apart via a longitudinal beam described below.

Optionally, each cell is provided with the explosion-proof valve 30101 described above. Fig. 13 shows an example where two explosion-proof valves 30101 are disposed on the bottom surface of a cell, that is, each cell assembly is provided with two rows of the explosion-proof valves 30101. In other words, each cell assembly is correspondingly provided with two exhaust passages extending along the second direction F2, to ensure that each row of the explosion-proof valves 30101 has a corresponding exhaust passage.

Optionally, as shown in Fig. 12, the housing 30200 may further include a rear edge beam 30202 and a rear crossbeam 30203 both extending along the first direction F1. The exhaust portion 30201 described above is disposed on the rear edge beam 30202. The rear crossbeam 30203 is disposed between the exhaust passage and the rear edge beam 30202, and the rear crossbeam 30203 includes a gas passage opening disposed offset from the exhaust portion 30201. Thus, the vent gas discharged via the exhaust passage is prevented from directly bursting out via the exhaust portion 30201. On one hand, the exhaust passage is prevented from being exposed by the exhaust portion 30201, ensuring the stability of an internal environment of the battery pack; on the other hand, the gas pressure of the vent gas is relieved, preventing the housing 30200 from bursting due to an excessively high local gas pressure at the location of the exhaust portion 30201.

Optionally, the exhaust portion 30201 may be an explosion-proof valve disposed on the housing.

Optionally, the end of the exhaust passage may have a gas passage gap with the rear crossbeam 30203, such that the exhaust passage is in communication with the exhaust portion 30201 sequentially via the gas passage gap and the gas passage opening. Specifically, the gas passage gap may be composed of two parts: one part being a gap formed between the mica plate 30500 at the end of the exhaust passage and the rear crossbeam 30203, and another part being a gap between an end of the cell assembly and the rear crossbeam 30203.

Optionally, as shown in Figs. 11 and 12, the battery pack may further include a bottom plate 30300, the bottom plate 30300 is connected to the housing 30200 and disposed at the bottom of the cell module 30100, the bottom plate 30300 is provided with a plurality of strip-shaped through holes, and each strip-shaped through hole is disposed corresponding to one row of the explosion-proof valves 30101, such that a corresponding mica plate 30500 is capable of fitting with the explosion-proof valves 30101 via the strip-shaped through hole.

Optionally, the support bars described above may be strip-shaped support foams. Under the elastic support effect of the strip-shaped support foams, the mica plates 30500 are capable of fitting tightly with the bottom of the cell module 30100, thereby ensuring the sealing of the exhaust passage, such that all the vent gas bursting through the explosion-proof valves 30101 is capable of entering the exhaust passage, further improving the completeness of the electrical and thermal separation.

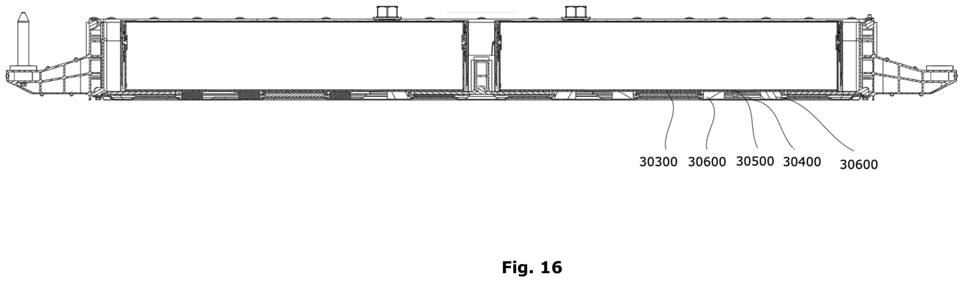

Optionally, as shown in Fig. 16, the battery pack may further include a support foam 30700 disposed between the bottom protection plate 30400 and the bottom plate 30300, and the bottom plate 30300 and the bottom protection plate 30400 are bonded together via the support foam 30700, so as to improve connection stability between the bottom plate 30300 and the bottom protection plate 30400.

Optionally, as shown in Fig. 12, the housing 30200 may further include a middle crossbeam 30204 extending along the first direction F1, the middle crossbeam 30204 is disposed on the bottom plate 30300, and each cell assembly is divided into two parts by the middle crossbeam 30204, so as to improve the bending strength of the battery pack and prevent the battery pack from bending due to an excessive dimension of the cell assembly in the second direction F2.

It should be noted that in Fig. 12, although it appears that each of the exhaust passages is divided into two sections by the crossbeam, the crossbeam is actually disposed on the bottom plate 30300, while a support gap is formed between the bottom plate 30300 and the bottom protection plate 30400 supported by a support foam 30700 described below, and the two sections of each exhaust passage may be in communication via the support gap.

Optionally, as shown in Fig. 12, the housing 30200 may further include a front crossbeam 30205, extending along the first direction F1, and the exhaust passage is disposed between the front crossbeam 30205 and the rear crossbeam 30203. Optionally, the housing 30200 may further include a front edge beam 30206, and a space for accommodating an electrical structure of the battery pack may be formed between the front edge beam 30206 and the front crossbeam 30205 (the electrical structure is an existing structure of the battery pack and will not be described in detail). Thus, the electrical structure and the exhaust portion 30201 are respectively disposed at two ends of the battery pack in the second direction F2, further achieving the electrical and thermal separation.

Optionally, as shown in Fig. 12, the housing 30200 may further include a longitudinal beam extending along the second direction F2, the two ends of the longitudinal beam are respectively connected to the front crossbeam 30205 and the rear crossbeam 30203, and two adjacent cell assemblies are separated via the longitudinal beam. On one hand, this ensures the independence between the cell assemblies, preventing a failure (such as overheating, venting, etc.) in one of the cell assemblies from affecting the operation of other cell assemblies; on the other hand, this effectively improves the strength of the battery pack.

Optionally, the battery pack may further include a structural adhesive disposed between the cell module 30100 and the bottom plate 30300, and the cell module 30100 and the bottom plate 30300 are bonded together via the structural adhesive, so as to improve an installation stability between the cell module 30100 and the bottom plate 30300.

Optionally, as shown in Fig. 11, the battery pack may further include a cooling plate 30800 and a thermally conductive structural adhesive 30900, and the cooling plate 30800 is bonded above the cell module 30100 via the thermally conductive structural adhesive 30900. Thus, by disposing the cooling plate 30800 at the top of the cell module 30100, cool air from the cooling plate 30800 is facilitated to flow toward the entire battery pack, improving the cooling efficiency of the cooling plate 30800.

Optionally, as shown in Fig. 11, the battery pack may further include a thermal insulation cotton 301000, the thermal insulation cotton 301000 may be placed over the cooling plate described above to reduce the dissipation of cooling capacity from the upper side of the cooling plate, thereby improving the utilization efficiency of the cooling capacity of the cooling plate.

Finally, it should be noted that the embodiments described above are merely specific implementations of the present application, used to illustrate the technical solutions of the present application rather than to limit the present application. The protection scope of the present application is not limited thereto. Although the present application has been described in detail with reference to the aforementioned embodiments, a person of ordinary skill in the art should understand that any person familiar with this technical field may still modify the technical solutions recorded in the aforementioned embodiments or may easily conceive of variations, or make equivalent substitutions for some technical features thereof within the technical scope disclosed by the present application. These modifications, variations, or substitutions do not cause an essence of a corresponding technical solution to depart from the spirit and scope of the technical solutions of the embodiments of the present application, and should all be covered within the protection scope of the present application.

## Claims

1. A battery pack, **characterized in that** the battery pack comprises a cell module, at least one thermal protection component, a plurality of support bars, a bottom plate, a housing, and a gas passage crossbeam,
the bottom plate is connected to the housing such that the bottom plate and the housing together enclose an accommodation space for accommodating the cell module;
the bottom of the cell module is provided with at least one row of explosion-proof valves, the cell module is disposed on the thermal protection component, and each thermal protection component is disposed corresponding to one row of explosion-proof valves;
the thermal protection component is disposed on the bottom plate, with the support bars disposed on both sides of each thermal protection component, and the cell module is disposed on the bottom plate via the support bars, such that two support bars disposed on both sides of the thermal protection component, the thermal protection component, and the bottom of the cell module together enclose an exhaust passage;
the gas passage crossbeam is disposed on the bottom plate, and the exhaust passage is in communication with the gas passage crossbeam; and
the housing comprises an exhaust portion, and the exhaust passage is in communication with the exhaust portion via the gas passage crossbeam.

2. The battery pack according to claim 1, **characterized in that**,
a plurality of thermal protection components are disposed on the bottom plate at intervals along a first direction, and each thermal protection component is provided with said support bars on two opposite sides thereof in the first direction, the bottom plate comprises a plurality of strip-shaped through holes, the thermal protection components are disposed in corresponding strip-shaped through holes, wherein the thermal protection components are provided with thinned portions; and
the battery pack further comprises a bottom protection plate disposed on the side of the bottom plate facing away from the cell module, the bottom protection plate and the bottom plate are spaced apart in a second direction, such that a buffer cavity is formed between the bottom protection plate and the bottom plate.

3. The battery pack according to claim 2, **characterized in that** the housing comprises a front edge beam, a rear edge beam, and two side beams disposed opposite to each other, the two ends of the front edge beam are respectively connected to first ends of the two side beams, and the two ends of the rear edge beam are respectively connected to second ends of the two side beams;
the exhaust portion is disposed on the rear edge beam, the gas passage crossbeam comprises a first cavity extending along the first direction, each of the side beams comprises a second cavity extending along a third direction, the first cavity is in communication with the exhaust portion via the second cavity, and the third direction is perpendicular to the first direction.

4. The battery pack according to claim 3, **characterized in that**,
the cell module comprises a plurality of cell assemblies, each of the cell assemblies comprises a plurality of cells stacked along the third direction, and terminals of the cells are disposed on end faces of the cells in the first direction.

5. The battery pack according to claim 4, **characterized in that** the battery pack further comprises a longitudinal beam, the longitudinal beam extends along the third direction perpendicular to the first direction, the gas passage crossbeam and the longitudinal beam divide the accommodation space into a plurality of placement portions, one of the cell assemblies is correspondingly disposed in each of the placement portions, and a side surface of each of the cell assemblies close to the gas passage crossbeam abuts against the gas passage crossbeam.

6. The battery pack according to claim 5, **characterized in that** both sides of the gas passage crossbeam that are opposite to each other in the third direction are provided with a plurality of ventilation holes, and each of the ventilation holes is in communication with a corresponding exhaust passage;
the edge of the ventilation hole is provided with a sealing strip, and the side surface of the cell assembly close to the gas passage crossbeam fits against the gas passage crossbeam via the sealing strip.

7. The battery pack according to claim 5, **characterized in that** the battery pack further comprises a position-limiting strip, the position-limiting strip is fixedly disposed on both sides of the gas passage crossbeam that are opposite to each other in the third direction, and the position-limiting strip extends along the first direction.

8. The battery pack according to claim 5, **characterized in that** the battery pack further comprises a front crossbeam and a rear crossbeam both extending along the first direction, two ends of the cell module respectively abut against the front crossbeam and the rear crossbeam;
the rear crossbeam further comprises a third cavity extending along the first direction and a gas passage opening, the gas passage opening is disposed offset from the exhaust portion, and the second cavity is in communication with the exhaust portion sequentially via the third cavity and the gas passage opening.

9. The battery pack according to claim 1, **characterized in that** the support bar comprises a support body and a plurality of elastic support columns, the elastic support columns are embedded in the support body, and the plurality of elastic support columns are spaced apart along an extending direction of the support body.

10. The battery pack according to any one of claims 1 to 9, **characterized in that** the thermal protection component comprises a plurality of thinned portions, and the plurality of thinned portions comprised in each of the thermal protection components are disposed in one-to-one correspondence with a plurality of the explosion-proof valves in a corresponding row.

11. A battery pack, **characterized in that** the battery pack comprises a housing, a partition beam, a plurality of cell assemblies, and a bottom plate,
the bottom plate is connected to the housing, and the bottom plate and the housing together enclose an accommodation space for accommodating the cell assemblies;
the partition beam is connected to the housing to divide the accommodation space into a plurality of accommodation portions, and each of the accommodation portions is provided with one of the cell assemblies correspondingly,
the bottom plate comprises at least one strip-shaped through hole, and
the bottom of each of the cell assemblies is provided with at least one row of explosion-proof valves, and each row of the explosion-proof valves is in communication with a corresponding strip-shaped through hole.

12. The battery pack according to claim 11, **characterized in that** the bottom plate comprises a plurality of strip-shaped through holes spaced apart along a first direction,
the partition beam comprises a middle crossbeam and a longitudinal beam, the middle crossbeam and the longitudinal beam are both connected to the housing to divide the accommodation space into four accommodation portions, wherein the middle crossbeam extends along the first direction, the longitudinal beam extends along a second direction, and the first direction is perpendicular to the second direction,
the battery pack further comprises a front crossbeam and a rear crossbeam extending along the first direction, the front crossbeam and the rear crossbeam are both connected to the housing, and
four cell assemblies are disposed between the front crossbeam and the rear crossbeam.

13. The battery pack according to claim 12, **characterized in that** the housing comprises a front edge beam, a rear edge beam, and two side edge beams connected to one another, the front edge beam and the rear edge beam both extend along the first direction, and the side edge beams extend along the second direction,
the two ends of the middle crossbeam are respectively connected to the two side edge beams,
the two ends of the front crossbeam are respectively connected to the two side edge beams,
the two ends of the rear crossbeam are respectively connected to the two side edge beams, and
the two ends of the longitudinal beam are respectively connected to the front crossbeam and the rear crossbeam.

14. The battery pack according to claim 13, **characterized in that** the bottom plate comprises a plurality of strip-shaped plate members extending along the second direction, a strip-shaped through hole is formed between two adjacent strip-shaped plate members,
each of the strip-shaped plate members is simultaneously connected to the front crossbeam, the middle crossbeam, and the rear crossbeam,
among the plurality of strip-shaped plate members, two of the strip-shaped plate members are respectively connected to the two side edge beams, and
one of the strip-shaped plate members is connected to the longitudinal beam.

15. The battery pack according to claim 14, **characterized in that** the two of the strip-shaped plate members, the two side edge beams, the front edge beam, and the rear edge beam are integrally formed by profile extrusion.

16. The battery pack according to claim 14, **characterized in that** the front crossbeam, the middle crossbeam, and the rear crossbeam each is connected to the plurality of strip-shaped plate members through a rivet, and
the front crossbeam, the middle crossbeam, and the rear crossbeam each has a hollow structure.

17. The battery pack according to claim 14, **characterized in that** the battery pack further comprises a cooling plate and a thermally conductive structural adhesive, the cooling plate is connected to the housing and located at the top of the cell assemblies, and
the cooling plate is bonded to the cell assemblies via the thermally conductive structural adhesive.

18. The battery pack according to claim 17, **characterized in that** the battery pack further comprises a bottom protection plate,
the bottom protection plate is connected to the housing and located at the bottom of the cell assemblies,
an external bolt is capable of sequentially passing through the cooling plate and the middle crossbeam and connecting to the bottom protection plate,
an external bolt is capable of sequentially passing through the cooling plate, the longitudinal beam, and a corresponding strip-shaped plate member and connecting to the bottom protection plate.

19. The battery pack according to claim 17, **characterized in that** the battery pack further comprises a structural adhesive and an adhesive-applying position-limiting strip,
the adhesive-applying position-limiting strip is disposed at the edge of the strip-shaped plate member, the structural adhesive is disposed inside the adhesive-applying position-limiting strip,
the cell assemblies and the bottom plate are bonded together via the structural adhesive.

20. The battery pack according to claim 18, **characterized in that** the battery pack further comprises a plurality of thermal protection components and a plurality of support bars,
the plurality of support bars are disposed on the bottom protection plate and spaced apart along the first direction, each of the thermal protection components is bridged via two adjacent support bars, and the thermal protection components are disposed on the side of the support bars facing away from the bottom protection plate, such that the two adjacent support bars, the bottom protection plate, and a corresponding thermal protection component together enclose an exhaust passage;
the cell assemblies are disposed on the thermal protection components,
among the explosion-proof valves comprised in each of the cell assemblies, each row of the explosion-proof valves is connected to a corresponding thermal protection component through a corresponding strip-shaped through hole, and the housing comprises an exhaust portion, and each exhaust passage is in communication with the exhaust portion.

21. A battery pack, **characterized in that** the battery pack comprises a cell module, at least one thermal protection component, a plurality of support bars, a bottom protection plate, and a housing;
the bottom of the cell module is provided with at least one row of explosion-proof valves, the cell module is disposed on the thermal protection component, and each thermal protection component is disposed corresponding to one row of the explosion-proof valves;
the plurality of support bars are disposed on the bottom protection plate and spaced apart along a first direction, each thermal protection component is bridged via two adjacent support bars, and the thermal protection component is disposed on a side of the support bars facing away from the bottom protection plate, such that the two adjacent support bars, the bottom protection plate, and the corresponding thermal protection component together enclose an exhaust passage, wherein the thermal protection component is provided with a thinned portion;
the bottom protection plate is connected to the housing and located below the cell module;
the housing comprises an exhaust portion, and each exhaust passage is in communication with the exhaust portion.

22. The battery pack according to claim 1, **characterized in that**,
the cell module comprises a plurality of cell assemblies arranged side by side along the first direction, each of the cell assemblies comprises a plurality of cells stacked along a second direction, and terminals of the cells are disposed on end faces of the cells in the first direction;
the exhaust passage extends along the second direction, and the second direction is perpendicular to the first direction.

23. The battery pack according to claim 22, **characterized in that** the housing comprises a side beam and a rear crossbeam both extending along the first direction;
the exhaust portion is disposed on the side beam;
the rear crossbeam is disposed between the exhaust passage and the side beam; the rear crossbeam comprises a gas passage opening disposed offset from the exhaust portion;
a gas passage gap is provided between the end of the exhaust passage and the rear crossbeam, such that the exhaust passage is in communication with the exhaust portion sequentially via the gas passage gap and the gas passage opening.

24. The battery pack according to claim 22, **characterized in that** the battery pack further comprises a bottom plate, the bottom plate is connected to the housing and disposed at the bottom of the cell module, the bottom plate is provided with a plurality of strip-shaped through holes, and each of the strip-shaped through holes is disposed corresponding to one row of the explosion-proof valves, such that a corresponding thermal protection component is capable of fitting with the explosion-proof valves via the strip-shaped through hole.

25. The battery pack according to claim 24, **characterized in that** the housing further comprises a middle crossbeam extending along the first direction, the middle crossbeam is disposed on the bottom plate, and each of the cell assemblies is divided into two parts by the middle crossbeam.

26. The battery pack according to claim 23, **characterized in that** the housing further comprises:
a front crossbeam, extending along the first direction, wherein the exhaust passage is disposed between the front crossbeam and the rear crossbeam;
a longitudinal beam, extending along the second direction, wherein the two ends of the longitudinal beam are respectively connected to the front crossbeam and the rear crossbeam, and two adjacent cell assemblies are separated via the longitudinal beam.

27. The battery pack according to claim 24, **characterized in that** the battery pack further comprises a support foam disposed between the bottom protection plate and the bottom plate, and the bottom plate and the bottom protection plate are bonded together via the support foam.

28. The battery pack according to claim 24, **characterized in that** the battery pack further comprises a structural adhesive disposed between the cell module and the bottom plate, and the cell module and the bottom plate are bonded together via the structural adhesive.

29. The battery pack according to any one of claims 21 to 28, **characterized in that** each thermal protection component comprises a plurality of thinned portions, and the plurality of thinned portions comprised in each thermal protection component are disposed in one-to-one correspondence with a plurality of the explosion-proof valves in a corresponding row.

30. The battery pack according to any one of claims 21 to 28, **characterized in that** the battery pack further comprises a cooling plate and a thermally conductive structural adhesive, and the cooling plate is bonded above the cell module via the thermally conductive structural adhesive.
